# EUROPEAN PATENT APPLICATION

(11) **EP 4 421 314 A1**
(43) Date of publication of application: **28.08.2024**
(21) Application number: 23158227.1
(22) Date of filing: 23.02.2023
(51) Int. Cl.: F03D 9/19, F03D 80/80, C25B 1/04, C25B 15/00, C25B 9/67, C25B 15/08

(54) **OFFSHORE WIND TURBINE AND METHOD FOR OPERATING AN OFFSHORE WIND TURBINE**

(71) Applicant: Siemens Gamesa Renewable Energy A/S, 7330 Brande (DK)
(72) Inventor: Kalogirou, Andromachi, 8000 Aarhus (DK); Vijayakumar, Diwakar Memangalam, 7100 Vejle (DK)
(74) Representative: SGRE-Association

(57) **Abstract**

An offshore wind turbine (1), comprising:
a generator (5) for generating electrical power from wind power,
a hydrogen production apparatus (10) for converting water (W) into hydrogen (H) by means of the generated electrical power, and
a water-intake apparatus (15) for taking in water (W) from the sea (16) and/or an open water reservoir and supplying the water (W) to the hydrogen production apparatus (10),
wherein the water-intake apparatus (15) comprises at least one UV-irradiation unit (22) for irradiating the water (W) .

By use of the at least one UV-irradiation unit, the water supplied from the water-intake apparatus to the hydrogen production apparatus can be treated with UV-light for providing an antifouling treatment.

## Description

The present invention relates to an offshore wind turbine and a method for operating an offshore wind turbine.

Hydrogen gas produced from renewable energies such as wind power provides a so-called green hydrogen that can replace fossil fuels. For example, green hydrogen gas can be used in fuel cell vehicles.

Recently, the concept of decentralized hydrogen production on an outside platform of an offshore wind turbine has been developed. Hence, such a wind turbine can produce electrical energy as well as hydrogen gas. A hydrogen production device of such an offshore wind turbine typically comprises an electrolysis unit which converts water (e.g., desalinated seawater) into hydrogen by means of electrical energy generated by the wind turbine. The decentralized offshore hydrogen wind turbines can potentially work in two different modes. In a first mode, the wind turbine delivers only hydrogen (island mode in which the wind turbine forms an island electrical grid). In a second hybrid mode, the wind turbine delivers both electrical energy and hydrogen gas. In particular, the wind turbine both supports an external electrical grid and produces hydrogen when electrical needs of the external electrical grid are covered, and the wind is still blowing.

It is one object of the present invention to provide an improved offshore wind turbine and an improved method for operating an offshore wind turbine.

Accordingly, an offshore wind turbine is provided. The offshore wind turbine comprises:
a generator for generating electrical power from wind power,
a hydrogen production apparatus for converting water into hydrogen by means of the generated electrical power, and
a water-intake apparatus for taking in water from the sea and/or an open water reservoir and supplying the water to the hydrogen production apparatus,
wherein the water-intake apparatus comprises at least one UV-irradiation unit for irradiating the water.

By use of the at least one UV-irradiation unit, the water supplied from the water-intake apparatus to the hydrogen production apparatus can be treated with UV-light for providing an antifouling treatment.

The water-intake apparatus is configured for taking in water from the sea and/or an open water reservoir. Seawater and water from (e.g., natural) open water reservoirs include microorganisms that can lead to marine growth in the systems leading to performance degradation. Submersed instrumentation is particularly affected by biofouling processes. Further, when instrumentation is deployed in a stationary position for long periods of time, biofouling will occur. Such unwanted marine growth can cause minor or greater failure of the affected equipment. By irradiating the water which is taken in by the water-intake apparatus, microorganisms are killed. Hence, a build-up of fouling at surfaces of the water-intake apparatus and/or the hydrogen production apparatus can be prevented. Further, UV-light provides an environmentally friendly antifouling strategy.

In particular, the water-intake apparatus is an essential part of an offshore wind turbine including its own hydrogen production apparatus. Water supplied by the water-intake apparatus to the hydrogen production apparatus can be used for an electrolysis process. In particular, water supplied by the water-intake apparatus to the hydrogen production apparatus can be used in an electrolysis unit of the hydrogen production apparatus for converting water into hydrogen. Furthermore, water supplied by the water-intake apparatus to the hydrogen production apparatus can also be used for cooling purposes of components of the hydrogen production apparatus.

The offshore wind turbine is an apparatus to convert the wind's kinetic energy into electrical energy. The wind turbine comprises, for example, a rotor having one or more blades connected each to a hub, a nacelle including the generator, and a tower holding, at its top end, the nacelle. The tower of the wind turbine may be connected via a transition piece to a foundation of the wind turbine such as a monopile in the seabed.

The wind turbine is an offshore wind turbine. Offshore includes marine environments as well as lakes and other open waters. The open water reservoir is, for example, a natural or artificial water volume. The open water reservoir is, for example, a standing (i.e. stagnant) or flowing water volume. The open water reservoir is, for example, an inland open water reservoir.

The hydrogen production apparatus is, in particular, configured for producing hydrogen gas by converting water by means of electrical energy generated by the generator of the wind turbine. Thereby, water is separated into hydrogen and oxygen by an electrolysis process in the hydrogen production apparatus, e.g., an electrolysis unit of the hydrogen production apparatus.

The hydrogen production apparatus comprises, for example, one or more electrolysis units for producing hydrogen gas, one or more compressor units for compresses the produced hydrogen gas, one or more hydrogen tanks for storing the produced hydrogen gas and/or one or more cooling units for cooling components of the hydrogen production apparatus.

The water-intake apparatus is, for example, a water-intake and supply apparatus. The water-intake apparatus comprises, for example, one or more pumps for pumping the water from the sea and/or open water reservoir to the hydrogen production apparatus. The one or more pumps are, for example, submersible pumps arranged at the inlet of the pipe for pumping water from the sea and/or the open water reservoir to the hydrogen production apparatus.

The water-intake apparatus comprises, for example, one or more caissons (e.g., at least partly submersed caissons) for accommodating the one or more pumps. The water-intake apparatus comprises, for example, one or more pipes for transporting the water from an inlet (e.g., submersed inlet) of the pipe to an outlet (e.g., an outlet at an outside platform of the wind turbine) of the pipe. The pump is, in particular, arranged at the inlet of the pipe. Each pipe comprises, for example, a riser.

Furthermore, the water-intake apparatus comprises, for example, one or more grills for filtering fishes, crabs, waste etc. The water-intake apparatus comprises, for example, one or more fine filters for filtering small particles. A fine filter is, for example, a microfilter preventing the passage of particles with a size of 500 µm or less, 300 µm or less, 100 µm or less, 50 µm or less and/or 10 µm or less.

In case that the water-intake apparatus comprises more than one pipe, each pipe may comprise a pump, a caisson, one or more grills, one or more fine filters, and/or one or more UV-irradiation units.

The at least one UV-irradiation unit comprises, for example, one or more UV-light sources such as one or more UV lamps. The respective UV-irradiation unit and/or the respective UV-light sources are arranged such that the emitted UV-light passes through the water transported through the one or more pipes of the water-intake apparatus.

A UV dose of a respective UV-irradiation unit and/or a respective UV-light source of the UV-irradiation unit has, for example, a value in the range of 30 to 120 mJ/cm² RED and/or a value of 40 mJ/cm² RED, 50 mJ/cm² RED, 60 mJ/cm² RED, 70 mJ/cm² RED, 80 mJ/cm² RED, 90 mJ/cm² RED, 100 mJ/cm² RED and/or 120 mJ/cm² RED (RED: reduction equivalent dose for UV dose) .

According to an embodiment, the offshore wind turbine comprises a tower and a platform arranged at an outer wall of the tower and/or of a transition piece of the tower, wherein the hydrogen production apparatus is arranged on the platform.

Having the hydrogen production apparatus arranged on the outside platform of the tower and/or the transition piece of the wind turbine provides a decentralized offshore hydrogen production turbine which is a novel solution for offshore green hydrogen production on a decentralized platform level.

The platform on which the hydrogen production apparatus is arranged, is, for example, an extended boat landing platform of the transition piece.

According to a further embodiment,
the hydrogen production apparatus comprises at least one electrolysis unit for converting water into hydrogen, and
the water-intake apparatus is fluidly connected with the at least one electrolysis unit for supplying water to the at least one electrolysis unit for converting the supplied water into hydrogen.

Thus, the water supplied by the water-intake apparatus is used for production of hydrogen. Further, the water may be desalinated before supplying the water to the at least one electrolysis unit for converting the desalinated water into hydrogen.

According to a further embodiment,
the hydrogen production apparatus comprises one or more cooled components and at least one cooling unit for cooling the one or more cooled components by means of a cooling liquid, and
the water-intake apparatus is fluidly connected with the at least one cooling unit for supplying water as the cooling liquid to the at least one cooling unit.

Thus, the water supplied by the water-intake apparatus is - in addition to or instead of for hydrogen production - used as a cooling liquid for cooling components of the hydrogen production apparatus.

The one or more cooled components of the hydrogen production apparatus include, for example, one or more electrolysis units, one or more compressor units, and/or the produced (and optionally compressed) hydrogen gas.

The cooling unit includes, for example, a heat exchanger.

According to a further embodiment,
the water-intake apparatus comprises a desalination unit for desalinating the irradiated water and supplying the desalinated water to the hydrogen production apparatus, and
the desalination unit is fluidly connected with an electrolysis unit of the hydrogen production apparatus for supplying the desalinated water to the electrolysis unit for converting the desalinated water into hydrogen, and/or
the desalination unit is fluidly connected with a cooling unit of the hydrogen production apparatus for supplying the desalinated water to the cooling unit as a cooling liquid.

Having the desalination unit allows to desalinate seawater and use it as starting product for hydrogen production and/or as a cooling liquid.

According to a further embodiment,
the water-intake apparatus comprises at least one pipe for transporting water,
the at least one pipe comprises an inlet for taking in water from the sea and/or the open water reservoir and an outlet for supplying the water to the hydrogen production apparatus, the outlet being arranged at a platform of the wind turbine, and
each of the at least one pipe includes at least one UV-irradiation unit arranged at the outlet of the pipe and/or on the platform.

Having the at least one UV-irradiation unit arranged at the outlet of the pipe and/or on the platform (e.g., the outside platform of the tower) allows to operate the at least one UV-irradiation unit in a dry environment. Further, maintenance of the at least one UV-irradiation unit is simplified.

The inlet of the pipe and/or at least a portion of the inlet of the pipe is, for example, submersed in seawater or water in the open water reservoir. The inlet of the pipe comprises, for example, a pump arranged in a caisson.

The outlet of the pipe is, for example, arranged at a platform of the wind turbine for supplying the water to the hydrogen production apparatus and/or to a desalination unit of the water-intake apparatus arranged on said platform.

In embodiments, the at least one UV-irradiation unit may also be arranged at the inlet of the pipe and/or submersed. By having the at least one UV-irradiation unit arranged at the inlet of the pipe, fouling build-up can advantageously be prevented in the entire pipe.

According to a further embodiment,
the water-intake apparatus comprises at least one filter unit for filtering water and supplying the filtered water to the hydrogen production apparatus and/or to a desalination unit of the water-intake apparatus, and
the at least one UV-irradiation unit is integrated into the at least one filter unit.

The at least one filter unit includes, for example, one or more fine filters. The at least one filter unit is, for example, arranged at an outlet of one or more pipes of the water-intake apparatus and/or on a platform of the wind turbine.

According to a further embodiment, the offshore wind turbine comprises a control unit for controlling a UV-irradiation intensity provided by the at least one UV-irradiation unit. Further, the control unit is configured to control the UV-irradiation intensity based on:
predetermined and/or obtained parameters of the water-intake apparatus, the hydrogen production apparatus and/or environmental conditions,
a determined risk level of fouling build-up in one or more components of the water-intake apparatus and/or the hydrogen production apparatus, and/or
a predicted and/or measured fouling build-up in one or more components of the water-intake apparatus and/or the hydrogen production apparatus.

Using the at least one UV-irradiation unit increases the power consumption of the wind turbine. By controlling the UV-irradiation intensity provided by the at least one UV-irradiation unit based on parameters of the water-intake apparatus, the hydrogen production apparatus and/or environmental conditions, allows to increase the power efficiency of the at least one UV-irradiation unit. In particular, the UV-irradiation intensity of the at least one UV-irradiation unit can be reduced in cases of only slow fouling processes and/or of a low risk for the build-up of fouling.

In particular, in the case of a decentralized offshore wind turbine, reducing the power consumption of auxiliary devices such as the UV-irradiation unit is of importance. Smaller power consumption allows, for example, to reduce a storage capacity of a battery of the wind turbine.

The one or more components of the water-intake apparatus and/or the hydrogen production apparatus are, in particular, components configured for water flow-through. Hence, surfaces of said one or more components are coming into contact with the water which is taken in at the inlet of the water-intake apparatus.

The control unit is, for example, configured to receive the predetermined and/or obtained (e.g., measured) parameters. Further, the control unit is, for example, configured to determine and/or predict a fouling build-up in components of the water-intake apparatus and/or the hydrogen production apparatus based on the receive predetermined and/or obtained parameters. Furthermore, the control unit is, for example, configured to generate a control signal for controlling the UV-irradiation intensity depending on the determined and/or predicted fouling build-up.

Thus, for parameters bearing a higher risk of fouling processes a greater required intensity of the UV-irradiation is determined.

According to a further embodiment, the predetermined and/or obtained parameters include:
an elapsed time duration since an initial start of operation of the water-intake apparatus,
a flow rate demand of an electrolysis unit of the hydrogen production apparatus and/or of a desalination unit of the water-intake apparatus,
a temperature of the water which is taken in by the water-intake apparatus,
a season,
a growth period of marine animals, mussels and/or water microorganisms, and/or
a measured fouling build-up in one or more components of the water-intake apparatus configured for water flow-through.

The water-intake apparatus comprises, for example, one or more temperature sensors for measuring a temperature of the water which is taken in by the water-intake apparatus. A higher water temperature usually leads to higher growth rate of biofouling.

The water-intake apparatus comprises, for example, one or more pressure sensors for measuring (e.g., monitoring) a pressure of the water which is taken in by the water-intake apparatus and travels through pipes of the water-intake apparatus. A pressure drop and/or reduced flow velocity indicates a fouling build-up because the growth of microorganisms at inner surfaces of pipes increases the resistance.

According to a further aspect, a method for operating an offshore wind turbine is provided. The offshore wind turbine comprises a water-intake apparatus with at least one UV-irradiation unit and a hydrogen production apparatus fluidly connected to the water-intake apparatus. Furthermore, the method comprises:
a) taking in water from the sea and/or an open water reservoir by the water-intake apparatus,
b) irradiating the water by the at least one UV-irradiation unit, and
c) supplying the irradiated water to the hydrogen production apparatus.

The method may comprise, before step c), a step of desalinating and/or demineralizing the water. In this case, in step c), the irradiated water is supplied to the hydrogen production apparatus after the water was desalinated and/or demineralized.

According to an embodiment of the further aspect, the method comprises:
determining a required UV-irradiation intensity provided by the at least one UV-irradiation unit depending on predetermined and/or obtained parameters of the water-intake apparatus, the hydrogen production apparatus and/or environmental conditions, and
controlling the at least one UV-irradiation unit based on the determined required UV-irradiation intensity.

According to a further embodiment of the further aspect, the required UV-irradiation intensity is determined depending on an elapsed time duration since an initial start of operation of the water-intake apparatus such that for a longer elapsed time duration a greater required UV-irradiation intensity is determined.

Thus, an operating power of the UV-based antifouling pre-treatment unit can be kept small (e.g., at minimal power consumption) at initial operations of the water-intake apparatus and/or the wind turbine. Further, the operating power of the UV-based antifouling pre-treatment unit can be gradually increased to higher capacities over time. This results in lower power consumption of the UV-irradiation unit when the system is newly installed.

According to a further embodiment of the further aspect, the required UV-irradiation intensity is determined depending on a flow rate demand of an electrolysis unit of the hydrogen production apparatus and/or a desalination unit of the water-intake apparatus such that for a higher flow rate demand a greater required UV-irradiation intensity is determined.

Thus, the power consumption of the at least one UV-irradiation unit can be reduced when the flow rate demand of said unit is low (e.g., during low wind).

According to a further embodiment of the further aspect, the required UV-irradiation intensity is determined depending on one or more parameters of environmental conditions and a determined risk level for fouling processes of the one or more parameters of environmental conditions such that for a higher risk level a greater required UV-irradiation intensity is determined.

Thus, the UV-irradiation intensity and, hence, the power consumption of the at least one UV-irradiation unit may be adapted to specific seasons or specific environmental conditions. For example, during specific seasons (e.g., some mussels grow only in specific seasons) and/or environmental conditions (e.g., warm water), when the possibility and risk of fouling build-up is low, the power consumption of the antifouling-unit can be reduced.

According to a further embodiment of the further aspect, the required UV-irradiation intensity is determined depending on a measured fouling build-up in one or more components of the water-intake apparatus configured for water flow-through such that for a higher measured fouling build-up a greater required UV-irradiation intensity is determined.

The respective entity, e.g., the control units, may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

According to a further aspect, the invention relates to a computer program product comprising a program code for executing the above-described method for operating an offshore wind turbine when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an offshore wind turbine according to an embodiment;
Fig. 2 shows a cross-section view of a pipe of a water-intake apparatus of the wind turbine of Fig. 1 along with a UV-irradiation unit;
Fig. 3 shows a cross-section view of a pipe of the water-intake apparatus of the wind turbine of Fig. 1 illustrating a fouling build-up inside the pipe;
Fig. 4 shows a hydrogen production apparatus and a water-intake apparatus of the wind turbine of Fig. 1 according to another embodiment;
Fig. 5 shows a hydrogen production apparatus and a water-intake apparatus of the wind turbine of Fig. 1 according to another embodiment;
Fig. 6 illustrates a determination of a required UV-irradiation intensity of a UV-irradiation unit of the water-intake apparatus of Fig. 1, 4 or 5 according to an embodiment;
Fig. 7 illustrates a determination of a required UV-irradiation intensity of a UV-irradiation unit of the water-intake apparatus of Fig. 1, 4 or 5 according to a further embodiment;
Fig. 8 illustrates a determination of a required UV-irradiation intensity of a UV-irradiation unit of the water-intake apparatus of Fig. 1, 4 or 5 according to a further embodiment;
Fig. 9 shows a flowchart illustrating a method for operating an offshore wind turbine according to an embodiment; and
Fig. 10 shows functional components of a control device of the wind turbine of Fig. 1.

In the Figures, like reference numerals designate like or functionally equivalent elements, unless otherwise indicated.

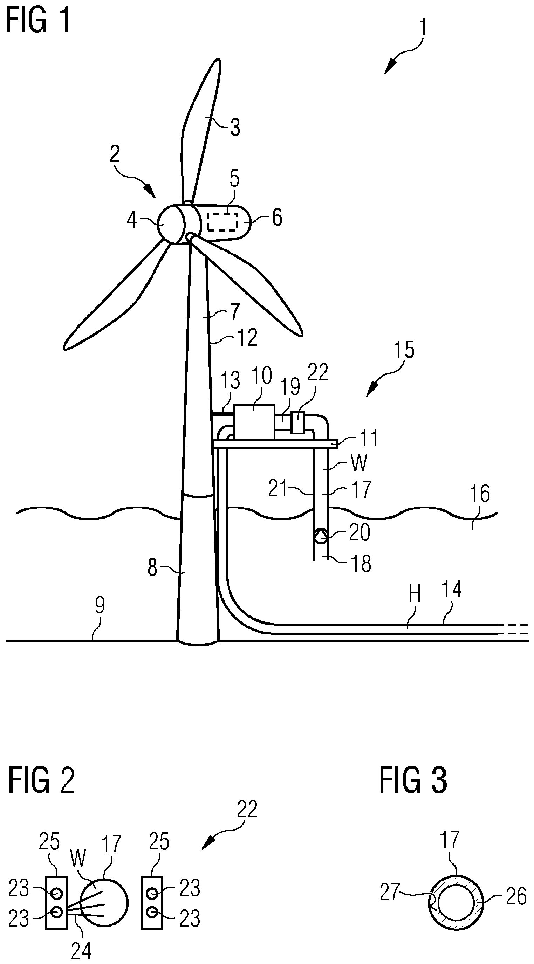

Fig. 1 shows an offshore wind turbine 1 according to an embodiment. The wind turbine 1 comprises a rotor 2 having one or more blades 3 connected to a hub 4. The hub 4 is connected via a rotation shaft (not shown) to a generator 5 arranged inside a nacelle 6. During operation of the wind turbine 1, the blades 3 are driven by wind to rotate and the wind's kinetic energy is converted into electrical energy by the generator 5 in the nacelle 6. The nacelle 6 is arranged at the upper end of a tower 7 of the wind turbine 1. The tower 7 is erected on a foundation 8 such as a monopile driven into a seabed 9. The tower 7 may comprise a transition piece (without reference sign) arranged adjacent to the foundation 8.

The wind turbine 1 further comprises a hydrogen production apparatus 10 for converting the electrical energy generated by the generator 5 into hydrogen gas H. The hydrogen production apparatus 10 is, in particular, arranged on an outside platform 11 of the wind turbine tower 7. The platform 11 is, for example, arranged at (e.g., attached to) an outer wall 12 of the tower 7 or the transition piece of the wind turbine 1.

The wind turbine 1 comprises, for example, an electrical cable 13 for transporting electrical current generated by the generator 5 to the hydrogen production apparatus 10. The wind turbine 1 further comprises, for example, a transportation pipe 14 for transporting the produced hydrogen gas H to another offshore or onshore installation (not shown), e.g., a consumer.

The wind turbine 1 further comprises a water-intake apparatus 15 for taking in water W from the sea 16 and/or from an open water reservoir (not shown). An example for an open water reservoir is a lake or another natural open water situated inland.

The water-intake apparatus 15 includes at least one pipe 17 with an inlet 18 for taking in water W from the sea 16 and/or the open water reservoir. Further, the at least one pipe 17 includes an outlet 19 fluidly connected with the hydrogen production apparatus 10. The water-intake apparatus 15 is configured for supplying water W, e.g., from the sea 16, to the hydrogen production apparatus 10. The supplied water W may be used for production of hydrogen H and/or for cooling purposes. The pipe 17 includes, for example, a riser 21.

As shown in Fig. 1, the water-intake apparatus 15 includes at least one pump 20 for pumping water W, e.g., from the sea 16, to the hydrogen production apparatus 10. The water-intake apparatus 15 includes, for example, at least one caisson (not shown) for accommodating the at least one pump 20.

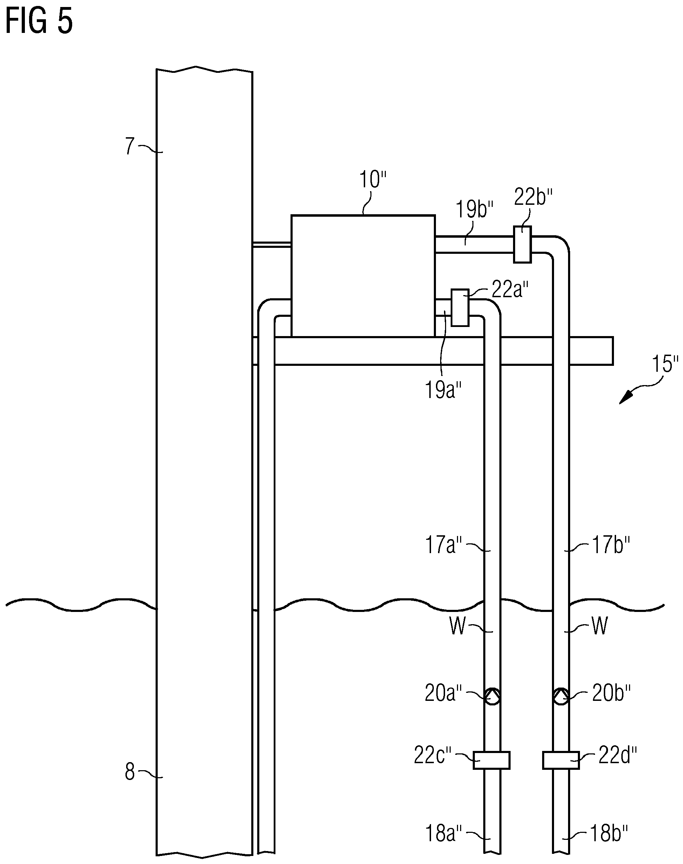

For an antifouling-treatment of the water W, the water-intake apparatus 15 includes at least one UV-irradiation unit 22. The at least one UV-irradiation unit 22 is, for example, arranged at the outlet 19 of the pipe 17. However, in other examples, one or more of the at least one UV-irradiation unit 22 may also be arranged at other portions of the at least one pipe 17 (Fig. 5).

Fig. 2 shows a cross-section view of the pipe 17 of the water-intake apparatus 15 of Fig. 1. The cross-section is taken at the location of the UV-irradiation unit 22. Water W flows through the pipe 17. As illustrated in Fig. 2, the UV-irradiation unit 22 includes one or more UV-light sources 23 each emitting UV-light 24. The one or more UV-light sources 23 are, for example, supported inside a housing 25 and/or by a support structure 25. In Fig. 2, emitted UV-light 24 is shown only for one of the UV-light sources 23 for illustration purposes. The emitted UV-light 24 passes through the water W in the pipe 17. Thereby, microorganisms present in the water W are killed. Hence, a build-up of fouling 26 is prevented. Fig. 3 shows another cross-section view of the pipe 17 of Fig. 1, wherein a build-up of fouling 26 at an inner surface 27 of the pipe 17 is illustrated. By use of the at least one UV-irradiation unit 22, such build-up of fouling 26 at surfaces 27 of the pipe 17, other surfaces of other components of the water-intake apparatus 15 and/or of the hydrogen production apparatus 10 are prevented or at least reduced.

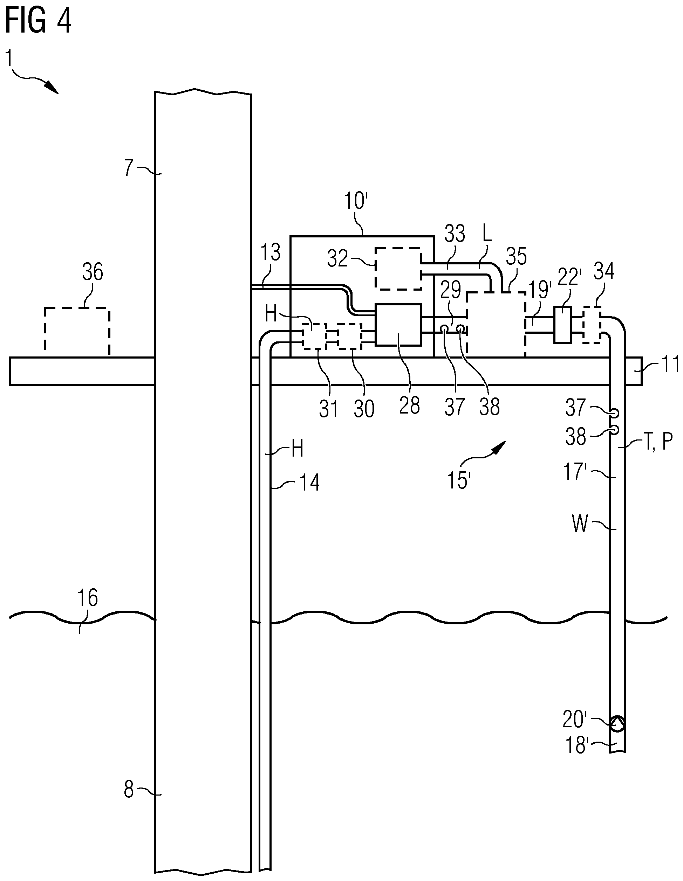

Fig. 4 shows a hydrogen production apparatus 10' and a water-intake apparatus 15' of the wind turbine 1 of Fig. 1 according to another embodiment.

The hydrogen production apparatus 10' in Fig. 4 is, similar as the hydrogen production apparatus 10 in Fig. 1, arranged on the outside platform 11 of the wind turbine tower 7.

The hydrogen production apparatus 10' in Fig. 4 includes at least one electrolysis unit 28 for converting water W into hydrogen gas H. The water-intake apparatus 15' is, for example, fluidly connected (e.g., by a pipe 29) with the at least one electrolysis unit 28 for supplying water W to the electrolysis unit 28. The electrolysis unit 28 converts the supplied water W into hydrogen gas H by a chemical process.

The hydrogen production apparatus 10' may further include at least one compressor unit 30 for compressing the produced hydrogen gas H. The hydrogen production apparatus 10' optionally includes one or more hydrogen tanks 31 for temporarily storing the produced hydrogen gas H.

As shown in Fig. 4, the hydrogen production apparatus 10' may optionally further include one or more cooling units 32 for cooling components (e.g., the electrolysis unit 28, the compressor unit 30, the hydrogen gas H in the tank 31 or the like) of the hydrogen production apparatus 10'. In this case, the water-intake apparatus 15' may, for example, be fluidly connected (e.g., with a pipe 33) with the one or more cooling units 32 for supplying water W as a cooling liquid L to the cooling unit 32. The cooling unit 32 is only schematically shown in Fig. 4. Although not shown, the cooling unit 32 may include a heat exchanger and be in thermal contact with the cooled components 28, 30, 31 of the hydrogen production apparatus 10' for heat exchange.

The water-intake apparatus 15' in Fig. 4 comprises, similar as the water-intake apparatus 15 in Fig. 1, at least one pipe 17' with an inlet 18' for taking in water W and an outlet 19' fluidly connected with the hydrogen production apparatus 10'. The water-intake apparatus 15' further includes at least one pump 20' for pumping water W from the sea 16 to the hydrogen production apparatus 10'. Moreover, also the water-intake apparatus 15' includes at least one UV-irradiation unit 22' for antifouling treatment of the water W. The at least one UV-irradiation unit 22' is in Fig. 4 exemplarily shown to be arranged at the outlet 19' of the pipe 17'. However, in other examples, one or more of the at least one UV-irradiation unit 22' may also be arranged at other portions of the at least one pipe 17' (Fig. 5).

The water-intake apparatus 15' may further comprise, for example, at least one filter unit 34 for filtering the water W before supplying the water W to the hydrogen production apparatus 10'. The filter unit 34 may be arranged next to the UV-irradiation unit 22' (e.g., downstream of the UV-irradiation unit 22'), as shown in Fig. 4. In other examples (not shown), the UV-irradiation unit 22' may also be integrated into the filter unit 34.

The water-intake apparatus 15' may further comprises at least one desalination unit 35 for desalinating the water W pumped from the sea 16 to the hydrogen production apparatus 10'. The UV-treatment of the water W takes, for example, place just before the desalination of the water W.

The at least one desalination unit 35 may be fluidly connected (pipe 29) with the at least one electrolysis unit 28 for converting the desalinated water W in the electrolysis unit 28 into hydrogen H. In addition or instead, the desalination unit 35 may be fluidly connected (pipe 33) with the at least one cooling unit 32 for using the desalinated water W as a cooling liquid L.

As shown in Fig. 4, the wind turbine 1 may include a control device 36 for controlling a UV-irradiation intensity I provided by the at least one UV-irradiation unit 22, 22'. The control device 36 is, in particular, configured to control the UV-irradiation intensity I based on predetermined and/or obtained parameters of the water-intake apparatus 15, 15', of the hydrogen production apparatus 10, 10' and/or environmental conditions. The control device 36 is, in particular, configured to control the UV-irradiation intensity I such that during periods of low risk of fouling build-up, the UV-irradiation intensity I is reduced to save power consumption of the one or more UV-irradiation units 22, 22'.

The water-intake apparatus 15' and/or the hydrogen production apparatus 10' may, for example, include one or more sensors 37 (Fig. 4) to measure a temperature T of the water W flowing through pipes 17', 29, 33 and other components of said apparatuses. Furthermore, the water-intake apparatus 15' and/or the hydrogen production apparatus 10' may, for example, include one or more sensors 38 to measure a pressure P of the water W flowing through pipes 17', 29, 33 and other components of said apparatuses.

Fig. 5 shows a hydrogen production apparatus 10" and a water-intake apparatus 15" of the wind turbine 1 of Fig. 1 according to another embodiment. In the following, only difference to the hydrogen production apparatus 10' and the water-intake apparatus 15' of Fig. 4 are described.

The water-intake apparatus 15" in Fig. 5 comprises two pipes 17a" and 17b" for the intake of water W. Although not shown, the water-intake apparatus 15" may also comprise more than two pipes. Each pipe 17a" and 17b" comprises at least one UV-irradiation unit 22a", 22b", 22c", 22d". Exemplarily, in Fig. 5 each pipe 17a" and 17b" is shown to comprise two UV-irradiation units 22a", 22b", 22c", 22d". One 22a", 22b" of the UV-irradiation units is exemplarily arranged at an outlet 19a", 19b" of the respective pipe 17a", 17b". Further, another one 22c", 22d" of the UV-irradiation units is exemplarily arranged at an inlet 18a", 18b" of the respective pipe 17a", 17b".

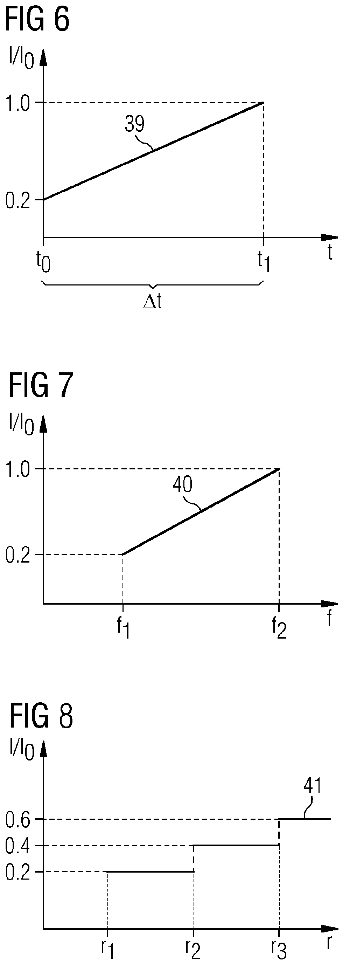

In the following, a method for operating an offshore wind turbine 1 is described with reference to Figs. 6 to 10.

The offshore wind turbine 1 comprises a water-intake apparatus 15, 15', 15" (Figs. 1, 4, 5) with at least one UV-irradiation unit 22, 22', 22". Further, the offshore wind turbine 1 comprises a hydrogen production apparatus 10, 10', 10" fluidly connected to the water-intake apparatus 15, 15', 15".

In a first step S1 of the method, electrical power is generated from wind power.

In a second step S2 of the method, water W is taking in from the sea 16 and/or an open water reservoir by the water-intake apparatus 15, 15', 15".

In an optional third step S3 of the method, a required UV-irradiation intensity I of the at least one UV-irradiation unit 22, 22', 22" is determined. In particular, the required UV-irradiation intensity I is determined depending on predetermined and/or obtained parameters of the water-intake apparatus 15, 15', 15", the hydrogen production apparatus 10, 10', 10" and/or environmental conditions.

As illustrated in Fig. 6, the required UV-irradiation intensity I is, for example, determined depending on an elapsed time duration Δt since an initial start of operation of the water-intake apparatus 15, 15', 15". Fig. 6 shows a diagram of the required UV-irradiation intensity I in units of the rated UV-irradiation intensity I₀ as a function of the elapsed time t since initial start of operation of the water-intake apparatus 15, 15', 15". Initial operation of the water-intake apparatus 15, 15', 15" starts, for example, at time t₀. As there is no fouling build-up yet, for example, an intensity I of the UV-light of 20% of the rated intensity I₀ (I/I₀=0.2) is sufficient. As illustrated by the graph 39, the longer the elapsed time duration Δt since initial start at t₀, the greater the required UV-irradiation intensity I. For example, at a time t₁ after initial start, the full capacity (100%) of the UV-irradiation unit(s) 22, 22', 22" is required to prevent fouling build-up.

As illustrated in Fig. 7, the required UV-irradiation intensity I is, for example, determined depending on a flow rate demand f of an electrolysis unit 28 (Fig. 4) of the hydrogen production apparatus 10, 10', 10" and/or a desalination unit 35. In particular, as illustrated by the graph 40, for a low flow rate demand f₁, a low required UV-irradiation intensity I is sufficient. However, if the flow rate demand f₂ is high, also a greater UV-irradiation intensity I is required to prevent fouling build-up.

As illustrated in Fig. 8, the required UV-irradiation intensity I may also, for example, be determined depending on one or more parameters of environmental conditions such as a temperature T and/or pressure P of the water W which is taken in by the water-intake apparatus 15, 15', 15", a season and/or a growth period of marine animals, mussels and/or water microorganism. Based on the one or more parameters of environmental conditions, a risk level r for fouling processes may be determined. As shown by the graph 41 in Fig. 8, if it is determined that the risk level r₁ for fouling processes is low, a low required UV-irradiation intensity I (e.g., I=0.2 I₀) is determined. For higher determined risk levels r₂, r₃, a correspondingly higher required UV-irradiation intensity I (e.g., I=0.4 I₀ or I=0.6 I₀) is determined.

Moreover, the required UV-irradiation intensity I may also be determined depending on a measured fouling build-up 26 (Fig. 3) in one or more components 17 of the water-intake apparatus 15, 15', 15". For example, a fouling build-up 26 may be detected based on a measurement of a pressure P of the water W in the pipe 17, wherein a pressure drop indicates a fouling build-up 26. Then, for a higher measured fouling build-up 26, a greater required UV-irradiation intensity I is determined.

If the optional step S3 is carried out, then also the optional step S4 is carried out.

In an optional fourth step S4 of the method, the at least one UV-irradiation unit 22, 22', 22" is controlled based on the determined required UV-irradiation intensity I.

In a fifth step S5 of the method, the water W is irradiated with UV-light 24 by the at least one UV-irradiation unit 22, 22', 22".

In a sixth step S6 of the method, the water W is supplied to the hydrogen production apparatus 10, 10', 10".

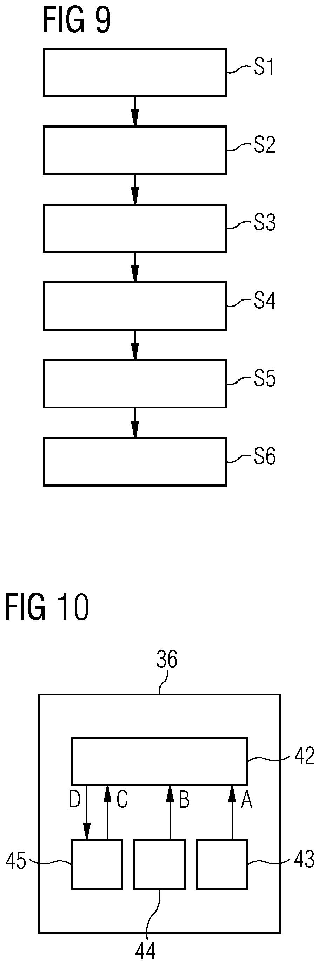

Fig. 10 illustrates functional components of the control device 36 (Fig. 4) of the wind turbine 1. The control device 36 includes, for example, a main control unit 42, an electrolysis control unit 43, a desalination control unit 44 and/or a UV-irradiation control unit 45.

The electrolysis control unit 43 and/or the desalination control unit 44 may send a water demand control signal A, B to the main control unit 42. The water demand control signal A, B indicates a flow rate demand f (Fig. 7) of the at least one electrolysis unit 28 and/or the at least one desalination unit 35 (Fig. 4).

Further, the UV-irradiation control unit 45 may send an antifouling feedback signal C to the main control unit 42.

The main control unit 42 determines the required UV-irradiation intensity I based on the water demand control signal A, the water demand control signal B and/or the antifouling feedback signal C. In particular, the main control unit 42 determines a control signal D with respect to the required UV-irradiation intensity I. Then, the main control unit 42 sends the control signal D to the UV-irradiation control unit 45 in order to control the at least one UV-irradiation unit 22, 22', 22" based on the control signal D. Thus, with the proposed offshore wind turbine 1 and method for operating the wind turbine 1, the water-intake apparatus 15, 15', 15" can be improved by providing a UV-based antifouling treatment by the UV-irradiation units 22, 22', 22". Further, at the same time a control scheme may be implemented for an efficient power consumption of the UV-irradiation units 22, 22', 22". Hence, even a remote and decentralized offshore wind turbine 1 having its own platform-based hydrogen production 10, 10', 10" can be run smoothly with only rare maintenance operations.

Although the present invention has been described in accordance with preferred embodiments, it is obvious for the person skilled in the art that modifications are possible in all embodiments.

## Claims

1. An offshore wind turbine (1), comprising:
a generator (5) for generating electrical power from wind power,
a hydrogen production apparatus (10) for converting water (W) into hydrogen (H) by means of the generated electrical power, and
a water-intake apparatus (15) for taking in water (W) from the sea (16) and/or an open water reservoir and supplying the water (W) to the hydrogen production apparatus (10),
wherein the water-intake apparatus (15) comprises at least one UV-irradiation unit (22) for irradiating the water (W) .

2. The offshore wind turbine according to claim 1, comprising a tower (7) and a platform (11) arranged at an outer wall (12) of the tower (7) and/or of a transition piece of the tower (7), wherein the hydrogen production apparatus (10) is arranged on the platform (11).

3. The offshore wind turbine according to claim 1 or 2, wherein:
the hydrogen production apparatus (10') comprises at least one electrolysis unit (28) for converting water (W) into hydrogen (H), and
the water-intake apparatus (15') is fluidly connected with the at least one electrolysis unit (28) for supplying water (W) to the at least one electrolysis unit (28) for converting the supplied water (W) into hydrogen (H).

4. The offshore wind turbine according to one of claims 1 - 3, wherein:
the hydrogen production apparatus (10') comprises one or more cooled components (28, 30, 31) and at least one cooling unit (32) for cooling the one or more cooled components (28, 30, 31) by means of a cooling liquid (L), and
the water-intake apparatus (15') is fluidly connected with the at least one cooling unit (32) for supplying water (W) as the cooling liquid (L) to the at least one cooling unit (32).

5. The offshore wind turbine according to one of claims 1 - 4, wherein:
the water-intake apparatus (15') comprises a desalination unit (35) for desalinating the irradiated water (W) and supplying the desalinated water (W) to the hydrogen production apparatus (10'), and
the desalination unit (35) is fluidly connected with an electrolysis unit (28) of the hydrogen production apparatus (10') for supplying the desalinated water (W) to the electrolysis unit (28) for converting the desalinated water (W) into hydrogen (H), and/or
the desalination unit (35) is fluidly connected with a cooling unit (32) of the hydrogen production apparatus (10') for supplying the desalinated water (W) to the cooling unit (32) as a cooling liquid (L).

6. The offshore wind turbine according to one of claims 1 - 5, wherein:
the water-intake apparatus (15) comprises at least one pipe (17) for transporting water (W),
the at least one pipe (17) comprises an inlet (18) for taking in water (W) from the sea (16) and/or the open water reservoir and an outlet (19) for supplying the water (W) to the hydrogen production apparatus (10), the outlet (19) being arranged at a platform (11) of the wind turbine (1), and
each of the at least one pipe (17) includes at least one UV-irradiation unit (22) arranged at the outlet (19) of the pipe (17) and/or on the platform (11).

7. The offshore wind turbine according to one of claims 1 - 6, wherein:
the water-intake apparatus (15') comprises at least one filter unit (34) for filtering water (W) and supplying the filtered water (W) to the hydrogen production apparatus (10') and/or to a desalination unit (35) of the water-intake apparatus (15'), and
the at least one UV-irradiation unit (22') is integrated into the at least one filter unit (34).

8. The offshore wind turbine according to one of claims 1 - 7, comprising a control unit (36) for controlling a UV-irradiation intensity (I) provided by the at least one UV-irradiation unit (22), wherein the control unit (36) is configured to control the UV-irradiation intensity (I) based on:
predetermined and/or obtained parameters (Δt, f, P, r, T) of the water-intake apparatus (15, 15'), the hydrogen production apparatus (10, 10') and/or environmental conditions,
a determined risk level (r₁, r₂, r₃) of fouling build-up (26) in one or more components (17, 18, 20, 29, 33) of the water-intake apparatus (15, 15') and/or the hydrogen production apparatus (10, 10'), and/or
a predicted and/or measured fouling build-up (26) in one or more components (17, 18, 20, 29, 33) of the water-intake apparatus (15, 15') and/or the hydrogen production apparatus (10, 10').

9. The offshore wind turbine according to claim 8, wherein the
predetermined and/or obtained parameters (Δt, f, P, r, T) include:
an elapsed time duration (Δt) since an initial start of operation of the water-intake apparatus (15, 15'),
a flow rate demand (f) of an electrolysis unit (28) of the hydrogen production apparatus (10') and/or a desalination unit (35) of the water-intake apparatus (15'),
a temperature (T) of the water (W) which is taken in by the water-intake apparatus (15, 15'),
a season,
a growth period of marine animals, mussels and/or water microorganisms, and/or
a measured fouling build-up (26) in one or more components (17, 18, 20, 29, 33) of the water-intake apparatus (15, 15') configured for water flow-through.

10. A method for operating an offshore wind turbine (1), the offshore wind turbine (1) comprising a water-intake apparatus (15) with at least one UV-irradiation unit (22) and a hydrogen production apparatus (10) fluidly connected to the water-intake apparatus (15), and the method comprises:
a) taking in (S2) water (W) from the sea (16) and/or an open water reservoir by the water-intake apparatus (15),
b) irradiating (S5) the water (W) by the at least one UV-irradiation unit (22), and
c) supplying (S6) the irradiated water (W) to the hydrogen production apparatus (10).

11. The method according to claim 10, comprising:
determining (S3) a required UV-irradiation intensity (I) provided by the at least one UV-irradiation unit (22, 22') depending on predetermined and/or obtained parameters (Δt, f, P, r, T) of the water-intake apparatus (15, 15'), the hydrogen production apparatus (10, 10') and/or environmental conditions, and
controlling (S4) the at least one UV-irradiation unit (22, 22') based on the determined required UV-irradiation intensity (I).

12. The method according to claim 11, wherein the required UV-irradiation intensity (I) is determined depending on an elapsed time duration (Δt) since an initial start of operation of the water-intake apparatus (15, 15') such that for a longer elapsed time duration (Δt) a greater required UV-irradiation intensity (I) is determined.

13. The method according to claim 11 or 12, wherein the required UV-irradiation intensity (I) is determined depending on a flow rate demand (f) of an electrolysis unit (28) of the hydrogen production apparatus (10, 10') and/or of a desalination unit (35) of the water-intake apparatus (15, 15') such that for a higher flow rate demand (f) a greater required UV-irradiation intensity (I) is determined.

14. The method according to one of claims 11 - 13, wherein the required UV-irradiation intensity (I) is determined depending on one or more parameters (T) of environmental conditions and a determined risk level (r₂, r₂, r₃) for fouling processes of the one or more parameters (T) of environmental conditions such that for a higher risk level (r₂, r₂, r₃) a greater required UV-irradiation intensity (I) is determined.

15. The method according to one of claims 11 - 14, wherein the required UV-irradiation intensity (I) is determined depending on a measured fouling build-up (26) in one or more components (17, 20, 29, 33) of the water-intake apparatus (15, 15') configured for water flow-through such that for a higher measured fouling build-up (26) a greater required UV-irradiation intensity (I) is determined.
